# EUROPÄISCHE PATENTSCHRIFT

(11) **EP 0 432 371 B1**
(45) Veröffentlichungstag und Bekanntmachung des Hinweises auf die Patenterteilung: **24.11.1993**
(21) Anmeldenummer: 90116726.2
(22) Anmeldetag: 31.08.1990
(51) Int. Cl.: F16K 5/06

(54) **Absperrhahn**
Stop cock
Robinet d'arrêt

(30) Priorität: 12.12.1989 DE 8914573 U
(43) Veröffentlichungstag der Anmeldung: 19.06.1991
(73) Patentinhaber: Streif, Hans, CH-6983 Magliaso/Lugano (CH)
(72) Erfinder: Gieseler, Benno, CH-5942 Kirchhundem 1 (CH)
(74) Vertreter: Stenger, Watzke & Ring Patentanwälte

(56) Entgegenhaltungen:
- AT-B- 385 831
- DD-A- 209 887
- DE-A- 2 054 045
- DE-A- 3 209 402
- DE-A- 3 336 099
- DE-A- 3 530 465

## Beschreibung

Die Erfindung betrifft eine Absperrarmatur für Leitungen, insbesondere für Gasleitungen, mit einem Gehäuse mit einer Eintrittsöffnung und einer Austrittsöffnung, einem drehbar in dem Gehäuse angeordneten Küken und mit einer das Küken gegen das Gehäuse abdichtenden Dichtungsanordnung, die in umlaufenden Nuten des Gehäuses angeordnet ist.

Ein bei Leitungen für brennbare und explosive Stoffe ständig auftretendes Problem ist die Brandschutzsicherung. Häufig wird die Leitungsinstallationsanlage durch Brandeinwirkungen derart beschädigt, daß das in den Leitungen geführte Medium unkontrolliert ausströmen kann und eine Brand- und Explosionsgefahr verursacht. Aus diesem Grund werden beispielsweise aus der DE-A- 33 16 659 bekannte Absperrarmaturen in Leitungen eingebaut, mit denen die Zufuhr des Mediums unterbrochen werden kann. Hierzu weist die Absperrarmatur ein Armaturengehäuse auf, das vorzugsweise als ein in die Leitung einsetzbarer Rohrabschnitt ausgebildet ist und in dem ein Ventilkörper angeordnet ist. Der Ventilkörper ist mit einer Verdrehvorrichtung und einem Stellgriff verbunden.

Zur Abdichtung des Ventilkörpers in dem Gehäuse weist die bekannte Absperrarmatur eine Dichtungsanordnung auf, die in ringförmigen Nuten mit Rechteckquerschnitt angeordnet ist. In diesen Ringnuten sind ringförmige Sitzringe aus hartem Polytetrafluorethylen angeordnet, die mit nachgiebigen Ringen aus einem elastischen Gummi hinterlegt sind, so daß sie dicht an der Kugel anliegen.

Nachteil dieser bekannten Absperrarmatur ist es, daß die Dichtung durch Brandeinwirkung verbrennt, so daß die Absperrarmatur beim Brandfall nicht auf Dauer dicht ist und es nach einer gewissen Zeitdauer wieder zu unkontrolliertem Ausströmen von Gas kommen kann.

Ausgehend von diesem Stand der Technik liegt der Erfindung die **Aufgabe** zugrunde, eine Absperrarmatur zu entwickeln, die eine Verbesserung der Abdichtung zwischen Gehäuse und Küken im Brandfall aufweist.

Die Aufgabe ist erfindungsgemäß dadurch gelöst, daß bei einer gattungsgemäßen Absperrarmatur wenigstens auf einer Seite des Kükens Bestandteil der Dichtungsanordnung ein Dehnstoffring bzw. eine Dehnstoffplatte ist, welche die Abdichtung bei Erreichen einer vorgegebenen Temperatur verstärken.

Eine erfindungsgemäße Absperrarmatur weist eine hohe thermische Belastbarkeit auf. Aufgrund dieser hohen thermischen Belastbarkeit weist die Absperrarmatur auch nach einer gegenüber den gesetzlichen Bestimmungen wesentlich längeren Verweildauer in einer Umgebungstemperatur von 650° C keine Leckverluste auf. Hieraus folgt, daß die erfindungsgemäße Absperrarmatur auch bei höheren Temperaturen dicht ist.

Bei einer bevorzugten Ausführungsform ist die Dichtungsanordnung als mehrlagige Dichtpackung ausgebildet, die einen Dehnstoffring, einen Graphitring und einen Dichtring aufweist. Bei dieser Absperrarmatur ist es besonders vorteilhaft, daß sich die Dichtpackung bei Erhitzung ausdehnt, so daß die Absperrarmatur auch dann noch dicht bleibt, wenn durch eine längere Erhitzung eine unterschiedliche Ausdehnung von dem Gehäuse und dem Küken aufgrund verschiedener Ausdehnungskoeffizienten eintritt.

Eine Verbesserung der Abdichtung wird dadurch erzielt, daß das Küken sowohl auf der Eingangs- als auch auf der Ausgangsseite mittels einer Dichtungsanordnung gegen das Gehäuse abgedichtet ist, wobei die Dichtungsanordnungen auf beiden Seiten gleich ausgebildet sind.

Um eine gerichtete Ausdehnung des Dehnstoffes der Dichtpackung zu erzielen, ist es vorteilhaft, daß der Dehnstoff im Boden der Nuten angeordnet ist, der Dichtring dem Küken anliegt und der Graphitring zwischen Dehnstoff und Dichtring liegt. Bei dieser Anordnung ist die Druckkraft des sich bei Erhitzung ausdehnenden Dehnstoffes auf das Küken zu gerichtet. Da der Dichtring bei höheren Temperaturen wegschmilzt ist zwischen dem Dehnstoff und dem Dichtring ein Graphitring angeordnet, der auch bei hohen Temperaturen abdichtet, wenn der Dichtring bereits geschmolzen ist. Auf diese leise bleibt die Absperrarmatur über einen großen Temperaturbereich und eine lange Zeitspanne dicht.

Bei einer zweiten Ausführungsform der erfindungsgemäßen Absperrarmatur weist die Dichtungsanordnung auf einer Seite des Kükens einen Dehnstoffring und einen Dichtring und auf der anderen Seite einen Graphitring und einen Dichtring auf. Bei dieser Ausgestaltung wird das Küken im Brandfall durch den sich ausdehnenden Dehnstoffring gegen den auf der dem Dehnstoffring gegenüberliegenden Seite des Kükens angeordneten, hitzebeständigen Graphitring gedrückt, so daß auch diese Ausgestaltung der erfindungsgemäßen Absperrarmatur über eine längere Zeit und einen großen Temperaturbereich dicht bleibt.

Eine Weiterentwicklung dieser Ausgestaltungsform sieht vor, daß eine Gehäusehälfte eine kükenseitige Ausnehmung hat, in der ein im Querschnitt L-förmiger Druckring angeordnet ist, wobei der Dehnstoffring zwischen dem Gehäuse und dem Druckring liegt.

Durch den zwischen Küken und Dehnstoffring angeordneten Druckring ist sichergestellt, daß die Druckkraft des Dehnstoffringes in axialer Richtung des als Rohrabschnitt ausgebildeten Gehäuses auf das Küken übertragen wird, so daß eine ausreichende Abdichtung zwischen Küken und Graphitring erzielt wird. Es ist bei dieser Ausgestaltung vorteilhaft, daß der Dichtring in dem Druckring liegt, so daß der vorzugsweise aus einem Elastomer bestehende Dichtring geschützt angeordnet ist. Derartige Dichtringe sind im Handel unter der Bezeichnung Persunan bzw. NBR erhältlich.

Um eine beidseitige Abdichtung des Kükens im Gehäuse im Brandfalle sicherzustellen weist der Druckring in vorteilhafter Weise Dichtflächen auf, die an der Mantelfläche des Kükens anliegen. Durch diese Dichtflächen wird auch dann noch eine gute Abdichtung erzielt, wenn der Dichtring bei einer bestimmten Temperatur geschmolzen ist und der Dehnstoffring das Küken gegen den Graphitring drückt.

Bei einer dritten Ausführungsform der erfindungsgemäßen Absperrarmatur mit einer um einen Winkel von 90° abgewinkelten Durchlaßöffnung ist vorgesehen, daß die Dehnstoffplatte zwischen einem Druckstück und dem Gehäuse angeordnet ist. Bei dieser Ausführungsform ist die Absperrarmatur als Eckventil ausgestaltet.

Das Druckstück ist hierbei vorteilhafterweise zylinderförmig ausgebildet und hat eine im wesentlichen konische Ausnehmung, deren Seitenflächen tangential am Küken anliegen, so daß das Küken im Brandfall durch die Ausdehnung der Dehnstoffplatte in die gegenüberliegende Gehäusehälfte abdichtend gedrückt wird.

Um auch im Normalzustand eine gute Abdichtung des Kükens im Gehäuse zu erzielen, weist die dem Dehnstoff gegenüberliegende Gehäusehälfte eine zylindrische Ausnehmung auf, die treppenförmig ausgebildet ist und in der der Graphitring und der Dichtring derart angeordnet sind, daß beide an der Mantelfläche des Kükens anliegen. Hierdurch wird die am Küken anliegende Dichtfläche vergrößert.

Eine weitere Verbesserung der Abdichtung wird durch in die Gehäusehälften eingesetzten Hülsen erzielt, die an der Mantelfläche des Kükens anliegen und einen der Durchlaßöffnung des Kükens entsprechenden Innendurchmesser aufweisen. Diese Hülsen dienen einerseits der Abdichtung des Kükens und andererseits werden durch diese Hülsen und durch die Gehäusehälften Nuten gebildet, in die der Dichtring oder der Graphitring eingelegt sind.

Um den Verschleiß an den Hülsen und dem Druckstück bzw. dem Druckring zu verringern wird vorgeschlagen, daß für das Druck-stück bzw. den Druckring und die Hülsen eine harte Stahllegierung, vorzugsweise ein vernickelter Stahl verwendet wird.

In einer bevorzugten Ausführungsform weist das Gehäuse zwei Gehäusehälften auf, die mit einem Verbindungselement verbunden sind, wobei im Verbindungselement ein Wellenlager angeordnet ist, durch das eine Welle greift, die das Küken mit einer Verdrehvorrichtung, vorzugsweise einem Handhebel verbindet. Diese Ausgestaltungsform der Absperrarmatur hat den Vorteil, daß sie sehr leicht zu Montieren ist, und daß die in die Nuten eingelegten Dichtpackungen leicht ausgewechselt werden können. Weiterhin kann die Absperrarmatur durch die Verdrehvorrichtung manuell betätigt werden.

Der Dehnstoff besteht zweckmäßigerweise aus einem wasserhaltigen Natriumsilikat mit geringen Mengen organischer Zusätze, das eine kompakte Struktur aufweist, flexibel ist und leicht zu handhaben ist. Des weiteren läßt sich dieser Stoff leicht verarbeiten und weist eine lange Feuerwiderstandsdauer auf.

Die Verdrehvorrichtung hat einen Stellgriff, an dem ein erstes drehbares Element angeordnet ist, welches die Form einer Pfanne aufweist. In dem pfannenförmigen Element ist ein zweites drehbares Element angeordnet, daß an der Welle befestigt ist, die das Küken mit der Verdrehvorrichtung verbindet.

Bei einer bevorzugten Ausführungsform ist zwischen dem Innenteil und der Verdrehvorrichtung eine Spiralfeder angeordnet, die mit ihrem einen Ende am Innenteil und mit ihrem anderen Ende an einem Stellgriff der Verdrehvorrichtung befestigt ist. Die beiden relativ zueinander verdrehbaren Elemente sind gegeneinander arretierbar.

Eine sichere Auslösung der Absperrarmatur bei Erreichen der vorgegebenen Temperatur wird durch eine Steuereinheit erzielt, die an der Verdrehvorrichtung angeordnet ist und ein Dehnstoffelement, einen Steuerbolzen und einen Verriegelungsbolzen aufweist, der in eine Aussparung des innenliegenden Elementes der Verdrehvorrichtung greift. Als Dehnstoff kann beispielsweise Paraffin benutzt werden.

Der Verriegelungsbolzen weist vorteilhafterweise ein annähernd halbkugelförmiges Ende auf, mit dem er in die Aussparung des innenliegenden Elementes greift. Durch dieses halbkugelförmige Ende des Verriegelungsbolzens ist ebenfalls eine sichere Auslösung der Absperrarmatur im Brandfall gewährleistet, da durch die Formgebung des Verriegelungsbolzens ein Verhaken der am innenliegenden Element angeordneten Aussparung mit dem Verriegelungsbolzen verhindert wird.

Zur Begrenzung der Drehbewegung des Kükens ist es vorteilhaft, wenn zwischen dem Wellenlager und der Verdrehvorrichtung ein Kerbstift angeordnet ist, der in einer Aussparung der Verdrehvorrichtung läuft und in einer Bohrung des Wellenlagers befestigt ist.

Zweckmäßigerweise ist das Gehäuse als ein in die Gasleitung einsetzbarer Rohrabschnitt ausgebildet. Hierdurch ist ein nachträglicher Einbau leicht möglich. Auch können herkömmliche Armaturen leicht ausgewechselt werden. Ebenso ist ein Einbau auch bei beengten Raumverhältnissen möglich.

Weitere Einzelheiten und Vorteile ergeben sich aus der nachfolgenden Beschreibung der zugehörigen Zeichnungen, in denen bevorzugte Ausführungsformen einer erfindungsgemäßen Absperrarmatur dargestellt sind. In den Zeichnungen zeigen:
- Fig. 1: eine Absperrarmatur in einer ersten Ausführungsform im Längsschnitt;
- Fig. 2: die Absperrarmatur gemäß Fig. 1 in einer Seitenansicht;
- Fig. 3: die Absperrarmatur gemäß den Figuren 1 und 2 in einem Querschnitt entlang der Linie III-III;
- Fig. 4: eine Absperrarmatur in einer zweiten Ausführungsform in einem Längsschnitt und
- Fig. 5: eine als Eckventil ausgebildete Absperrarmatur in einem Längsschnitt.

Die Absperrarmatur weist ein Gehäuse 2 und eine Verdrehvorrichtung 1 auf. Das Gehäuse 2 ist aus zwei Gehäusehälften 3, 4 und einem Verbindungselement 5 zusammengesetzt.

Zwischen den beiden Gehäusehälften 3, 4 ist ein Küken 9 über eine Welle 14, die durch ein Wellenlager 7 greift, mit der Verdrehvorrichtung 1 verbunden. Die beiden Gehäusehälften 3, 4 weisen eine Einlaß- bzw. Auslaßöffnung auf. An den dem Küken 9 zugewandten Seiten der Gehäusehälften 3, 4 ist jeweils eine umlaufende Nut 8 angeordnet, in die eine Dichtpackung 10 eingelegt ist.

Die Dichtpackung 10 besteht aus einem Dehnstoffring 11, einem Graphitring 12 und einem Dichtring 13, der an der Oberfläche des Kükens 9 anliegt. Der Dehnstoffring 11 ist im Boden der Nuten 8 angeordnet und besteht aus einem wasserhaltigen Natriumsilikat mit geringen Mengen organischer Zusätze. Der Dehnstoffring 11 weist eine kompakte Struktur auf und ist flexibel. Der Dichtring 13 besteht aus einem flexiblen Elastomer.

Das Küken 9 weist die Form einer Kugel auf, in der eine Bohrung 15 als Durchlaßkanal angeordnet ist und ist, wie bereits oben beschrieben über die Welle 14 mit der Verdrehvorrichtung 1 verbunden.

Die Verdrehvorrichtung 1 hat einen Stellgriff 16, an dem ein erstes drehbares Element 17 angeordnet ist, welches die Form einer Pfanne aufweist. In dem pfannenförmigen Element 17 ist ein zweites drehbares Element 19 angeordnet, das mit einer Schraube 20 auf dem Kopf der Welle 14 verschraubt ist. Zwischen den drehbaren Elementen 17, 19 ist eine Spiralfeder 18 angeordnet, die mit ihrem einen Ende am Element 17 und mit ihrem anderen Ende am Element 19 befestigt ist.

An dem pfannenförmigen Element 17 des Stellgriffs ist außen eine Steuereinheit 21 angeordnet. Die Steuereinheit 21 weist eine Patrone 22 auf, in der ein Dehnstoffelement 31 beispielsweise aus Paraffin angeordnet ist. Am Kopf der Patrone 22 ist ein Steuerbolzen 23 befestigt, der in seinem Mittelbereich verjüngt ausgebildet ist. Zwischen dem Steuerbolzen 23 und dem Gehäuse der Steuereinheit 21 ist eine Druckfeder 24 angeordnet, die den Steuerbolzen 23 auf das Dehnstoffelement 31 drückt.

Das Gehäuse der Steuereinheit 21 durchgreift mit einem rohrförmigen Ansatz das pfannenförmige Element 17. In diesem rohrförmigen Ansatz des Gehäuses der Steuereinheit 21 ist ein Verriegelungsbolzen 25 im rechten Winkel zum Steuerbolzen 23 angeordnet. Der Verriegelungsbolzen 25 greift mit einem annähernd halbkugelförmigen Ende durch das Rohrstück und das pfannenförmige Element 17 in eine, am Innenteil 19 angeordnete Aussparung 26. Die Aussparung 26 ist kegelförmig ausgebildet und in radialer Richtung des Elementes 19 angeordnet. An seinem dem halbkugelförmigen Ende gegenüberliegenden Ende des Verriegelungsbolzens 25 ist eine zweite Druckfeder 27 angeordnet. Der Verriegelungsbolzen 25 weist ebenfalls in seiner Mitte eine Verjüngung auf.

An der Unterseite des pfannenförmigen Elementes 17 ist eine Aussparung 28 angeordnet, die die Form eines Viertelkreises aufweist. In dieser Aussparung 28 ist ein Kerbstift 29 geführt, der in einer Bohrung 30 des Wellenlagers 7 befestigt ist. Durch diesen Kerbstift 29 ist eine Bewegung des Stellgriffs 16 in einem Bereich von 90° möglich, so daß die Absperrarmatur zwischen einer offenen Stellung und einer geschlossenen Stellung stufenlos verstellt werden kann.

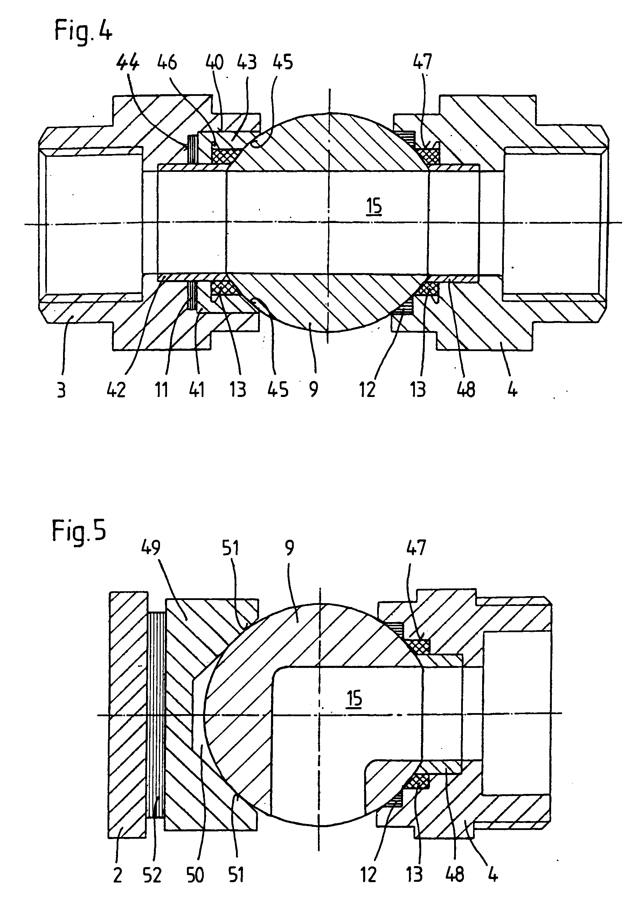

Bei dem in Fig. 4 schematisch dargestellten zweiten Ausführungsbeispiel weist die einganseitig angeordnete Gehäusehälfte 3 auf ihrer dem Küken 9 zugewandten Seite eine zylinderförmige Ausnehmung 40 auf, in der ein im Querschnitt L-förmiger Druckring 41 und eine zylindrische Hülse 42 eingesetzt sind. Der Druckring 41 liegt mit seiner Mantelfläche seines Schenkels 43 an der zylindrischen Innenfläche der Ausnehmung 40 an. Die Schmalseiten des Schenkels 43 haben eine dem Küken 9 entsprechende Kontur und sind als Dichtflächen 45 ausgebildet.

Zwischen der Stirnfläche des Druckrings 41 und der Bodenfläche 44 der Ausnehmung 40 ist der Dehnstoffring 11 angeordnet. In die zwischen der Hülse 42 und dem Druckring 41 gebildete Nut 46 ist der Dichtring 13 eingelegt. Somit liegen der Dichtring 13, die Dichtfläche 45 des Schenkels 43 des Druckrings 41 und die Hülse 42 dichtend an der Mantelfläche des Kükens 9 an.

Die ausgangseitig angeordnete Gehäusehälfte 4 hat eine zylindrische Ausnehmung 47, die treppenförmig ausgebildet ist. In die Gehäusehälfte 4 ist eine Hülse 48 eingesetzt, die zusammen mit der treppenförmigen Ausnehmung 47 eine Nut bildet, in die der Dichtring 13 eingesetzt ist. Ferner ist in die treppenförmige Ausnehmung 47 der Graphitring 12 derart eingesetzt, daß sowohl der Graphitring 12 als auch der Dichtring 13 an der Mantelfläche des Kükens 9 anliegen.

Der Druckring 45 und die Hülsen 42 und 48 sind aus vernickeltem Stahl hergestellt, so daß sie auch nach einer Vielzahl von Betätigungen nicht verschlissen sind.

Das in Fig. 5 schematisch dargestellte dritte Ausführungsbeispiel zeigt eine als Eckventil ausgebildete Absperrarmatur. In dem Küken 9 ist eine um einen Winkel von 90° abgewinkelte Durchlaßöffnung 15 angeordnet, die die in der Zeichnung nicht dargestellte Gehäusehälfte mit der Einlaßöffnung mit der die Auslaßöffnung aufweisende Gehäusehälfte 4 verbindet. Die Gehäusehälfte 4 weist ebenfalls eine treppenförmige Ausnehmung 47 auf, in die eine Hülse 48 eingesetzt ist, welche einen Innendurchmesser aufweist, der dem Durchmesser der Durchlaßöffnung 15 entspricht. In der treppenförmigen Ausnehmung 47 ist zwischen der Hülse 48 und der Gehäusewandung der Dichtring 13 derart eingesetzt, daß er an der Mantelfläche des Kükens 9 dichtend anliegt. Ferner ist in die treppenförmige Ausnehmung 40 die Graphitdichtung 12 eingesetzt, so daß sie ebenfalls an der Mantelfläche des Kükens 9 anliegt.

Der die Ausgangsöffnung aufweisenden Gehäusehälfte 4 gegenüberliegend angeordnet ist ein Druckstück 49, welches zylinderförmig ist und eine kegelstumpfförmige Ausnehmung 50 aufweist, deren Seitenflächen 51 an der Mantelfläche des Kükens 9 anliegen. Das Druckstück 49 ist unter Zwischenlage der Druckplatte 52 an dem Gehäuse 2 der Absperrarmatur abgestützt.

Die Funktionsweise der Absperrarmatur ist wie folgt:

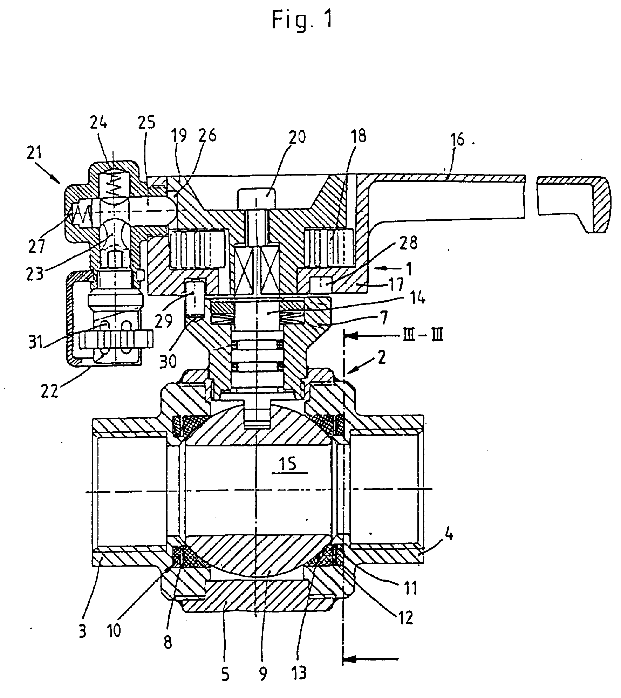

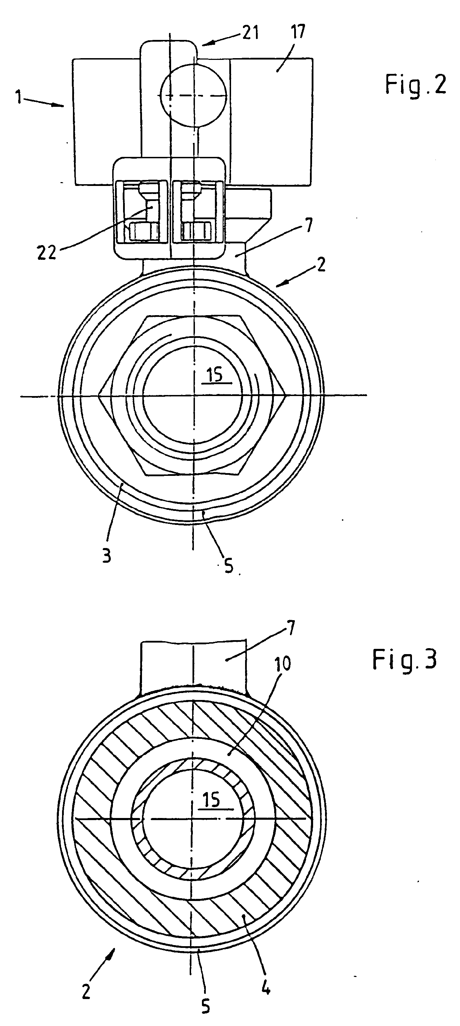

In den Figuren 1 bis 5 ist die Absperrarmatur in ihrer offenen Stellung gezeigt. Die Bohrung 15 des Kükens 9 verbindet dabei die Einlaß- und die Auslaßöffnung der beiden Gehäusehälften 3, 4. Die zwischen dem innenliegenden Element 19 und dem pfannenförmigen Element 17 angeordnete Spiralfeder 18 ist vorgespannt. Die Druckfeder 24 drückt den Steuerbolzen 23 gegen das Dehnelement der Patrone 22, so daß der Steuerbolzen 23 mit seinem nicht verjüngten Ende in die Verjüngung des Verriegelungsbolzens 25 eingreift. Auf diese Art kann der Verriegelungsbolzen 25 nicht verschoben werden und greift mit seinem halbkugelförmigen Ende in die Aussparung 26 des innenliegenden Elementes 19. Bei Erreichen einer vorgegebenen Temperatur dehnt sich das Dehnstoffelement 31 der Patrone 22 aus und verschiebt den Steuerbolzen 23 entgegen der Federkraft der Druckfeder 24 nach oben, so daß die Verjüngungen des Steuerbolzens 23 und des Verriegelungsbolzens 25 übereinander liegen und der Verriegelungsbolzen 25 nun im begrenzten Maße verschoben werden kann.

Da die Federkraft der Spiralfeder 18 größer ist als die Druck-kraft der Feder 27 wird das Innenteil 19 gedreht. Die Kante der Aussparung 26 drückt dabei gegen das halbkugelförmige Ende des Verriegelungsbolzens 25 der entgegen der Federkraft der Druckfeder 27 aus der Aussparung 26 herausgedrückt wird. Die Spiralfeder ist so vorgespannt, daß sich das Küken 9 um einen Winkel von ungefähr 90° dreht und die Absperrarmatur verschließt.

Durch die steigende Temperatur dehnt sich auch der Dehnstoffring 11 der in Fig. 1 dargestellten Dichtungsanordnung aus und drückt den Dichtring 13 gegen das Küken 9. Durch die Ausdehnung des Dehnstoffringes 11 bleibt die Absperrarmatur auch dann noch dicht, wenn das Küken 9 und das Gehäuse 2 unterschiedliche Ausdehnungskoeffizienten aufweisen und sich dementsprechend auch unterschiedlich bei Wärme ausdehnen. Wenn der Dichtring 13, der aus einem Elastomer oder einem weichen Polytetrafluorethylen besteht, bei einer Temperatur von ungefähr 220° C geschmolzen ist, drückt der Dehnstoff 11 den Graphitring 12 gegen das Küken, so daß auch jetzt noch eine ausreichende Abdichtung der Armatur gewährleistet ist.

Bei dem in Fig. 4 dargestellten Ausführungsbeispiel drückt der Dehnstoffring 11 bei einer Temperaturerhöhung den Druckring 41 und den in dem Druckring 41 angeordneten Dichtring 13 gegen die Mantelfläche des Kükens 9. Über den Druckring 41 wird das Küken in die in der ausgangsseitigen Gehäusehälfte angeordnete Ausnehmung 47 gedrückt, so daß das Küken auch nach einer längeren Temperatureinwirkung, durch die der ausgangseitige Dichtring 13 geschmolzen sein kann, noch durch die Anlage des Kükens 9 an dem Graphitring 12 und der Hülse 48 abgedichtet ist. Somit werden über den Dehnstoffring 11 und den Druckring 41 die unterschiedlichen Ausdehnungskoeffizienten des Gehäuses 2 und des Kükens 9 ausgeglichen. Ferner wird auch dann noch eine Abdichtung erzielt, wenn die eingangs- und ausgangsseitig angeordneten Dichtringe 13 geschmolzen oder verbrannt sind.

Bei dem in Fig. 5 dargestellten Eckventil dehnt sich im Brandfall die Dehnstoffplatte 52 aus und drückt das Küken 9 mittels dem zwischen dem Küken 9 und der Dehnstoffplatte 52 angeordneten Druckstück 49 in die treppenförmige Ausnehmung 47 der ausgangsseitigen Gehäusehälfte 4. Auch bei dieser Absperrarmatur wird die Abdichtung nach einer länger einwirkenden hohen Temperatur durch den Graphitring 12 und die Hülse 48 sichergestellt.

Die Erfindung ist nicht auf die dargestellten Ausführungsbeispiele beschränkt. Es sind mehrere Änderungen und Abwandlungen möglich, ohne den Rahmen der Erfindung zu verlassen. Beispielsweise können auch andere Materialkombinationen als die beschriebenen verwendet werden. Ferner kann eine andere Form der Steuereinheit Verwendung finden und auch eine andere Schließvorrichtung als die dargestellte Spiralfeder angewendet werden.

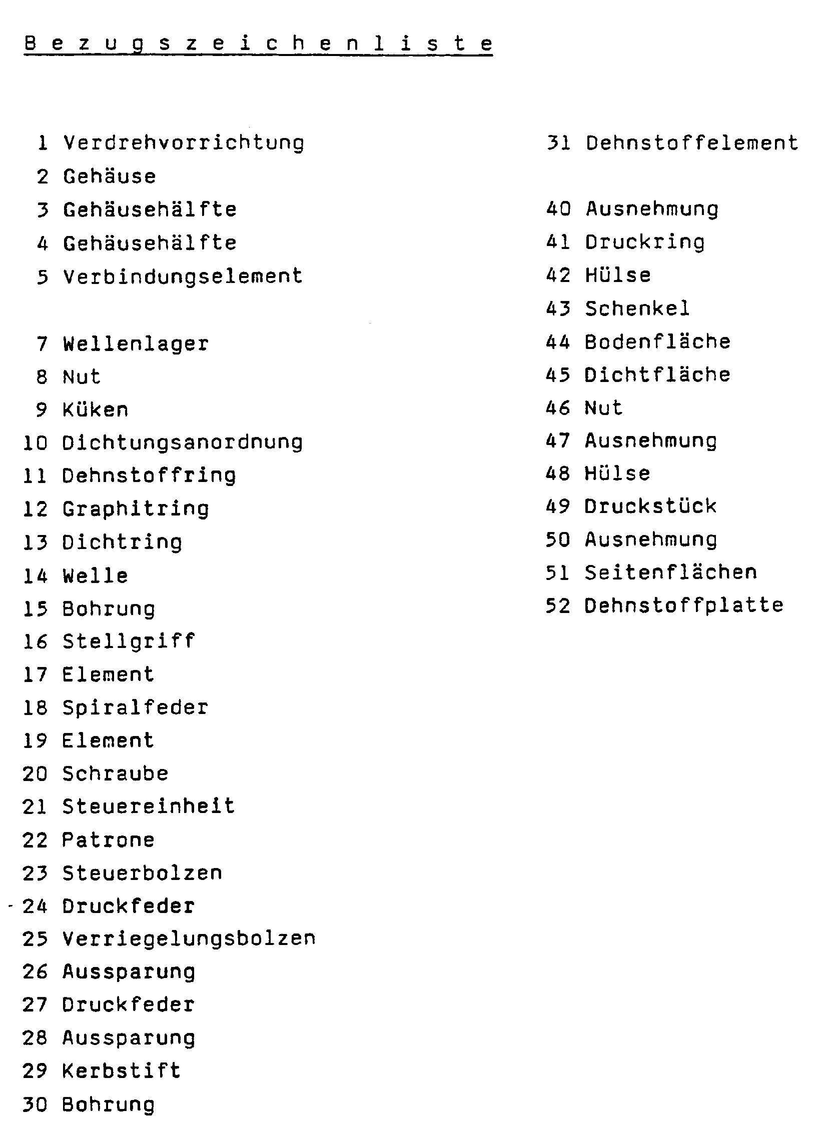

## Patentansprüche

1. Absperrarmatur für Leitungen, insbesondere für Gasleitungen, mit einem Gehäuse (2) mit einer Eintrittsöffnung und einer Austrittsöffnung, einem drehbar in dem Gehäuse (2) angeordneten Küken (9) und mit einer das Küken (9) gegen das Gehäuse (2) abdichtenden Dichtungsanordnung (10), die in umlaufenden Nuten (8) des Gehäuses (2) angeordnet ist,
**dadurch gekennzeichnet,**
daß wenigstens auf einer Seite des Kükens (9) Bestandteil der Dichtungsanordnung (10) ein Dehnstoffring (11) bzw. eine Dehnstoffplatte (52) ist, welche die Abdichtung bei Erreichen einer vorgegebenen Temperatur verstärken.

2. Absperrarmatur nach Anspruch 1, dadurch gekennzeichnet, daß die Dichtungsanordnung (10) als mehrlagige Dichtpackung ausgebildet ist, die einen Dehnstoffring (11), einen Graphitring (12) und einen Dichtring (13) aufweist.

3. Absperrarmatur nach Anspruch 1 oder 2, dadurch gekennzeichnet, daß das Küken (9) sowohl auf der Eingangs- als auch auf der Ausgangsseite mittels einer Dichtungsanordnung (10) gegen das Gehäuse (2) abgedichtet ist, wobei die Dichtungsanordnungen (10) auf beiden Seiten gleich ausgebildet sind.

4. Absperrarmatur nach einem der Ansprüche 1 bis 3, dadurch gekennzeichnet, daß der Dehnstoffring (11) im Boden der Nuten (8) angeordnet ist, der Dichtring (13) an dem Küken (9) anliegt und der Graphitring (12) zwischen Dehnstoffring (11) und Dichtring (13) liegt.

5. Absperrarmatur nach Anspruch 1, dadurch gekennzeichnet, daß die Dichtungsanordnung (10) auf einer Seite des Kükens (9) einen Dehnstoffring (11) und einen Dichtring (13) und auf der anderen Seite einen Graphitring (12) und einen Dichtring (13) aufweist.

6. Absperrarmatur nach Anspruch 5, dadurch gekennzeichnet, daß eine Gehäusehälfte (3) eine kükenseitige Ausnehmung (40) hat, in der ein im Querschnitt L-förmiger Druckring (41) angeordnet ist, wobei der Dehnstoffring (11) zwischen der Gehäusehälfte (3) und dem Druckring (41) liegt.

7. Absperrarmatur nach Anspruch 6, dadurch gekennzeichnet, daß der Dichtring (13) in dem Druckring (41) liegt.

8. Absperrarmatur nach Anspruch 6 und 7, dadurch gekennzeichnet, daß der Druckring (41) eine Dichtfläche (45) hat, die an der Mantelfläche des Kükens (9) anliegt.

9. Absperrarmatur nach Anspruch 1 mit einer um einen Winkel von 90° abgewinkelten Durchlaßöffnung (15) dadurch gekennzeichnet, daß die Dehnstoffplatte (52) zwischen einem Druckstück (49) und dem Gehäuse (2) angeordnet ist.

10. Absperrarmatur nach Anspruch 9, dadurch gekennzeichnet, daß das Druckstück (49) zylinderförmig ist und eine im wesentlichen konische Ausnehmung (50) aufweist, deren Seitenflächen (51) tangential am Küken (9) anliegen.

11. Absperrarmatur nach einem der Ansprüche 1 bis 10, dadurch gekennzeichnet, daß die dem Dehnstoff gegenüberliegende Gehäusehälfte (4) eine zylindrische Ausnehmung (47) aufweist, die treppenförmig ausgebildet ist und in der der Graphitring (12) und der Dichtring (13) derart angeordnet sind, daß beide an der Mantelfläche des Kükens (9) anliegen.

12. Absperrarmatur nach einem der Ansprüche 1 bis 11, gekennzeichnet durch in die Gehäusehälften (3, 4) eingesetzte Hülsen (42, 48), die an der Mantelfläche des Kükens (9) anliegen und einen der Durchlaßöffnung (15) des Kükens (9) entsprechenden Innendurchmesser aufweisen.

13. Absperrarmatur nach einem der Ansprüche 1 bis 12, dadurch gekennzeichnet, daß das Druckstück (49), der Druckring (41) und die Hülsen (42, 48) aus einer harten Stahllegierung, vorzugsweise aus vernickeltem Stahl bestehen.

14. Absperrarmatur nach einem der Ansprüche 1 bis 13, dadurch gekennzeichnet, daß die Gehäusehälften (3, 4) mit einem Verbindungselement (5) verbunden sind, in welchem ein Wellenlager (7) angeordnet ist, durch das eine Welle (14) greift, die das Küken (9) mit einer Verdrehvorrichtung (1) verbindet.

15. Absperrarmatur nach einem der Ansprüche 1 bis 14, dadurch gekennzeichnet, daß der Dehnstoffring (11) bzw. die Dehnstoffplatte (52) ein wasserhaltiges Natriumsilikat mit geringen Mengen organischer Zusätze ist.

16. Absperrarmatur nach einem der Ansprüche 1 bis 15, dadurch gekennzeichnet, daß an der Verdrehvorrichtung eine Steuereinheit (21) angeordnet ist, die ein Dehnstoffelement (31), einen Steuerbolzen (23) und einen Verriegelungsbolzen (25) aufweist, der in einer Aussparung (26) eines in der Verdrehvorrichtung (1) innen angeordneten Elementes (19) greift.

17. Absperrarmatur nach Anspruch 16, dadurch gekennzeichnet, daß der Verriegelungsbolzen (25) ein annähernd halbkugelförmiges Ende aufweist, mit dem er in die Aussparung (26) des Elementes (19) greift, und daß die Steuereinheit (21) eine Druckfeder (27) aufweist, die den Verriegelungsbolzen (25) in die Aussparung (26) drückt.

18. Absperrarmatur nach einem der Ansprüche 1 bis 17, dadurch gekennzeichnet, daß zwischen dem Element (19) und der Verdrehvorrichtung (1) eine Spiralfeder (18) angeordnet ist, die mit ihrem einen Ende am Element (19) und mit ihrem anderen Ende an einem pfannenförmigen Element (17) der Verdrehvorrichtung (1) befestigt ist.

19. Absperrarmatur nach einem der Ansprüche 1 bis 18, dadurch gekennzeichnet, daß zwischen dem Wellenlager (7) und der Verdrehvorrichtung (1) ein Kerbstift (29) angeordnet ist, der in einer Aussparung (28) der Verdrehvorrichtung (1) läuft und in einer Bohrung (30) des Wellenlager (7) befestigt ist.

20. Absperrarmatur nach einem der Ansprüche 1 bis 19, dadurch gekennzeichnet, daß das Gehäuse (2) als ein in die Gasleitung einsetzbarer Rohrabschnitt ausgebildet ist.

## Claims

1. Shut-off fitting for lines, in particular for gas lines, having a housing (2) with an inlet opening and an outlet opening, a plug (9) arranged so as to be rotatable in the housing (2) and having a sealing arrangement (10) which seals the plug (9) with respect to the housing (2) and is arranged in surrounding grooves (8) in the housing (2), characterised in that, at least on one side of the plug (9), a component of the sealing arrangement (10) is a ring of expansible material (11) or a plate of expansible material (52) which reinforce the sealing when a predetermined temperature is reached.

2. Shut-off fitting according to Claim 1, characterised in that the sealing arrangement (10) is designed as a multi-layer sealing packing which has a ring of expansible material (11), a graphite ring (12) and a sealing ring (13).

3. Shut-off fitting according to Claim 1 or 2, characterised in that the plug (9) is sealed both that the inlet side and at the outlet side with respect to the housing (2) by means of a sealing arrangement (10), the sealing arrangements (10) on both sides being of the same design.

4. Shut-off fitting according to one of Claims 1 to 3, characterised in that the ring of expansible material (11) is arranged in the base of the grooves (8), the sealing ring (13) bears against the plug (9) and the graphite ring (12) lies between the ring of expansible material (11) and sealing ring (13).

5. Shut-off fitting according to Claim 1, characterised in that the sealing arrangement (10) has, on one side of the plug (9) a ring of expansible material (11) and a sealing ring (13) and, on the other side, a graphite ring (12) and a sealing ring (13).

6. Shut-off fitting according to Claim 5, characterised in that one housing half (3) has a plug-side recess (40) in which a pressure ring (41) which is L-shaped in cross-section is arranged, the ring of expansible material (11) lying between the housing half (3) and the pressure ring (41).

7. Shut-off fitting according to Claim 6, characterised in that the sealing ring (13) lies in the pressure ring (41).

8. Shut-off fitting according to Claims 6 and 7, characterised in that the pressure ring (41) has a sealing face (45) which bears against the circumferential surface of the plug (9).

9. Shut-off fitting according to Claim 1, having a passage opening (15) angled at an angle of 90°, characterised in that the plate of expansible material (52) is arranged between a pressure piece (49) and the housing (2).

10. Shut-off fitting according to Claim 9, characterised in that the pressure piece (49) is cylindrical and has an essentially conical recess (50) whose lateral surfaces (51) bear tangentially against the plug (9).

11. Shut-off fitting according to one of Claims 1 to 10, characterised in that the housing half (4) lying opposite the expansible material has a cylindrical recess (47) which is step-shaped and in which the graphite ring (12) and the sealing ring (13) are arranged in such a manner that both bear against the circumferential surface of the plug (9).

12. Shut-off fitting according to one of Claims 1 to 11, characterised by sleeves (42, 48) which are inserted into the housing halves (3, 4), bear against the circumferential surface of the plug (9) and have an internal diameter corresponding to the passage opening (15) of the plug (9).

13. Shut-off fitting according to one of Claims 1 to 12, characterised in that the pressure piece (49), the pressure ring (41) and the sleeves (42, 48) consist of a hard steel alloy, preferably of nickel-plated steel.

14. Shut-off fitting according to one of Claims 1 to 13, characterised in that the housing halves (3, 4) are connected by a connecting element (5) in which a shaft bearing (7) is arranged through which a shaft (14) engages which connects the plug (9) to a torsion device (1).

15. Shut-off fitting according to one of Claims 1 to 14, characterised in that the ring of expansible material (11) or the plate of expansible material (52) is a water-containing sodium silicate with small amounts of organic additives.

16. Shut-off fitting according to one of Claims 1 to 15, characterised in that there is arranged on the torsion device a control unit (21) which has an expansible material element (31), a control bolt (23) and a locking bolt (25) which engages in a recess (26) in an element (19) arranged internally in the torsion device (1).

17. Shut-off device according to Claim 16, characterised in that the locking bolt (25) has an approximately hemispherical end with which it engages in the recess (26) of the element (19) and in that the control unit (21) has a compressive spring (27) which presses the locking bolt (25) into the recess (26).

18. Shut-off device according to one of Claims 1 to 17, characterised in that, between the element (19) and the torsion device (1) a spiral spring (18) is arranged which is fastened with its one end on the element (19) and with its other end on a pan-shaped element (17) of the torsion device (1).

19. Shut-off fitting according to one of Claims 1 to 18, characterised in that, between the shaft bearing (7) and the torsion device (1), a notched pin (29) is arranged which runs in a recess (28) of the torsion device (1) and is fastened in a bore (30) of the shaft bearing (7).

20. Shut-off fitting according to one of Claims 1 to 19, characterised in that the housing (2) is designed as a pipe section which can be inserted into the gas line.

## Revendications

1. Robinet d'arrêt pour canalisations, notamment pour canalisations de gaz, comportant un corps (2) qui présente un orifice d'entrée et un orifice de sortie, un boisseau (9) disposé pour tourner dans le corps (2) et une structure d'étanchéité (10) assurant l'étanchéité du boisseau (9) vis-à-vis du corps (2), cette structure étant disposée dans des rainures périphériques (8) du corps (2), caractérisé en ce
qu'au moins d'un côté du boisseau (9), une bague (11) en matière dilatable (10) ou une plaque en matière dilatable (52) fait partie de la structure d'étanchéité, ces éléments renforçant l'étanchéité lorsqu'une température prédéterminée est atteinte.

2. Robinet d'arrêt selon la revendication 1, caractérisé en ce que la structure d'étanchéité (10) est constituée sous forme de garniture d'étanchéité à plusieurs couches comportant une bague en matière dilatable (11), une bague en graphite (12) et une bague d'étanchéité (13).

3. Robinet d'arrêt selon la revendication 1 ou la revendication 2, caractérisé en ce que le boisseau (9) est rendu étanche vis-à-vis du corps (2) au moyen d'une structure d'étanchéité (10) aussi bien du côté de l'entrée que du côté de la sortie, les structures d'étanchéité (10) étant constituées de façon identique des deux côtés.

4. Robinet d'arrêt selon l'une des revendications 1 à 3, caractérisé en ce que la bague en matière dilatable (11) est disposée au fond des rainures (8), la bague d'étanchéité (13) repose sur le boisseau (9) et la bague en graphite (12) est placée entre la bague en matière dilatable (11) et la bague d'étanchéité (13).

5. Robinet d'arrêt selon la revendication 1, caractérisé en ce que la structure d'étanchéité (10) comporte, d'un côté du boisseau (9), une bague en matière dilatable (11) et une bague d'étanchéité (13) et, de l'autre côté, une bague en graphite (12) et une bague d'étanchéité (13).

6. Robinet d'arrêt selon la revendication 5, caractérisé en ce qu'une moitié (3) du corps présente un évidement (40) du côté du boisseau, une bague de pression (41) à section en forme de L étant disposée dans cet évidement, la bague en matière dilatable (11) étant disposée entre la moitié (3) du corps et la bague de pression (41).

7. Robinet d'arrêt selon la revendication 6, caractérisé en ce que la bague d'étanchéité (13) est placée dans la bague de pression (41).

8. Robinet d'arrêt selon les revendications 6 et 7, caractérisé en ce que la bague de pression (41) présente une face d'étanchéité (45) reposant sur la surface latérale du boisseau (9).

9. Robinet d'arrêt selon la revendication 1, présentant un orifice de sortie (15) dévié suivant un angle de 90°, caractérisé en ce que la plaque en matière dilatable (52) est disposée entre une pièce de pression (49) et le corps (2).

10. Robinet d'arrêt selon la revendication 9, caractérisé en ce que la pièce de pression (49) est cylindrique et présente un évidement (50) essentiellement conique, les parois latérales (51) de cet évidement reposant tangentiellement sur le boisseau (9).

11. Robinet d'arrêt selon l'une des revendications 1 à 10, caractérisé en ce que la moitié de corps (4) située à l'opposé de la matière dilatable présente un évidement cylindrique (47) constitué en forme d'escalier, dans lequel la bague en graphite (12) et la bague d'étanchéité (13) sont disposées de manière à reposer toutes les deux sur la surface latérale du boisseau (9).

12. Robinet d'arrêt selon l'une des revendications 1 à 11, caractérisé par des douilles (42,48) insérées dans les moitiés de corps (3,4), ces douilles reposant sur la surface latérale du boisseau (9) et présentant un diamètre intérieur qui correspond à l'ouverture de passage (45) du boisseau (9).

13. Robinet d'arrêt selon l'une des revendications 1 à 12, caractérisé en ce que la pièce de pression (49), la bague de pression (41) et les douilles (42,48) sont constituées en un acier dur allié, de préférence en acier au nickel.

14. Robinet d'arrêt selon l'une des revendications 1 à 13, caractérisé en ce que les moitiés de corps (3,4) sont assemblées avec un élément de liaison (5) dans lequel est disposé un palier (7) traversé par un arbre (14) reliant le boisseau (9) à un dispositif de rotation (1).

15. Robinet d'arrêt selon l'une des revendications 1 à 14, caractérisé en ce que la bague en matière dilatable (11) et, le cas échéant, la plaque en matière dilatable (52) sont en un silicate de sodium contenant de l'eau avec de faibles quantités d'adjuvants organiques.

16. Robinet d'arrêt selon l'une des revendications 1 à 15, caractérisé en ce qu'une unité de commande (21) est disposée sur le dispositif de rotation, cette unité comportant un élément à matière dilatable (31), une tige de commande (23) et une tige de verrouillage (25) s'engageant dans un évidement (26) d'un élément (19) disposé à l'intérieur du dispositif de rotation (1).

17. Robinet d'arrêt selon la revendication 16, caractérisé en ce que la tige de verrouillage (25) présente une extrémité sensiblement hémisphérique par laquelle elle s'engage dans l'évidement (26) de l'élément (19), et en ce que l'unité de commande (21) comporte un ressort de compression (27) qui pousse la tige de verrouillage (25) dans l'évidement (26).

18. Robinet d'arrêt selon l'une des revendications 1 à 17, caractérisé en ce qu'un ressort spiral (18) est disposé entre l'élément (19) et le dispositif de rotation (1), ce ressort étant fixé par l'une de ses extrémités à l'élément (19) et par son autre extrémité à un élément en forme de cuvette (17) du dispositif de rotation (1).

19. Robinet d'arrêt selon l'une des revendications 1 à 18, caractérisé en ce qu'une goupille (29) est disposée entre le palier (7) et le dispositif de rotation (1), cette goupille s'engageant dans un évidement (28) du dispositif de rotation (1) et étant fixé dans un trou (30) du palier (7).

20. Robinet d'arrêt selon l'une des revendications 1 à 19, caractérisé en ce que le corps (2) est constitué sous forme de tronçon tubulaire pouvant être inséré dans la canalisation de gaz.
